# EUROPEAN PATENT APPLICATION

(11) **EP 4 734 430 A1**
(43) Date of publication of application: **29.04.2026**
(21) Application number: 25209317.4
(22) Date of filing: 17.10.2025
(51) Int. Cl.: H04L 5/00

(54) **ML-BASED DEMAPPING IN A WIRELESS COMMUNICATION SYSTEM**

(30) Priority: 22.10.2024 FI 20246255
(71) Applicant: Nokia Solutions and Networks Oy, 02610 Espoo (FI)
(72) Inventor: KAYA, Aliye, Chatham (US); KOCHARLAKOTA, Kameswara Atchutaram, Vantaa (FI); SADAGOPAN, Yuva Kumar, Espoo (FI)
(74) Representative: Nokia EPO representatives

(57) **Abstract**

The present subject matter relates to a method comprising: receiving a radio frequency signal comprising a first radio frequency signal, the first radio frequency signal being configured to comprise a control information set,; obtaining a first set of symbols representing the control information set from a frequency domain of the radio frequency signal; inputting at least the first set of symbols to a machine learning model to obtain an output set, wherein the output set indicates a content of the control information set or a non-transmission event with no control information present.

## Description

### TECHNICAL FIELD

Various example embodiments relate to telecommunication systems, and more particularly to an apparatus for demapping symbols of control information.

### BACKGROUND

In wireless communication systems like Long Term Evolution (LTE) and Fifth-generation wireless networks (5G), control channels such as the Physical Uplink Control Channel (PUCCH), serve as a key example of how control information is transmitted from mobile devices to the network. However, decoding these channels is inherently complex due to the varying formats, modulation schemes, and the need to accurately extract control information under diverse and often challenging radio conditions. This complexity underscores the importance of robust and efficient decoding mechanisms in modern communication systems.

### SUMMARY

Example embodiments provide an apparatus (referred to as first apparatus) for a wireless communication system, the first apparatus comprising at least one processor; and at least one memory storing instructions that, when executed by the at least one processor, cause the first apparatus to perform: receive a radio frequency signal comprising a first radio frequency signal, the first radio frequency signal being configured to comprise a control information set; obtain a first set of symbols representing the control information set from a frequency domain of the radio frequency signal; input at least the first set of symbols to a machine learning model to obtain an output set, wherein the output set indicates a content of the control information set or a non-transmission event with no control information present.

Example embodiments provide a method comprising: receiving a radio frequency signal comprising a first radio frequency signal, the first radio frequency signal being configured to comprise a control information set; obtaining a first set of symbols representing the control information set from a frequency domain of the radio frequency signal; inputting at least the first set of symbols to a machine learning model to obtain an output set, wherein the output set indicates a content of the control information set or a non-transmission event with no control information present.

Example embodiments provide a computer program product comprising processor executable instructions for causing an apparatus for performing at least the method.

Example embodiments provide a non-transitory computer readable medium comprising program instructions that, when executed by an apparatus, cause the apparatus to perform at least the method.

Example embodiments provide an apparatus (referred to as second apparatus), the second apparatus comprising at least one processor; and at least one memory storing instructions that, when executed by the at least one processor, cause the second apparatus to perform: receive a training dataset, the training dataset comprising entries, wherein each entry of the entries comprises an input component and a label component, the input component comprising a first set of symbols representing a control information set, the label component comprising the control information set; use the training dataset to train a machine learning model to predict a presence of the control information set for an input comprising a first set of symbols representing a control information set.

Example embodiments provide a training method for training a machine learning model, the training method comprising: receiving a training dataset, the training dataset comprising entries, wherein each entry of the entries comprises an input component and a label component, the input component comprising a first set of symbols representing a control information set, the label component comprising the control information set; using the training dataset to train a machine learning model to predict a presence of the control information set for an input comprising a first set of symbols representing a control information set.

Example embodiments provide a computer program product comprising processor executable instructions for causing an apparatus for performing at least the training method.

Example embodiments provide a non-transitory computer readable medium comprising program instructions that, when executed by an apparatus, cause the apparatus to perform at least the training method.

Example embodiments provide a computer implemented data structure comprising training data for training a machine learning model for predicting control information in a wireless communication system, the data structure comprising entries, wherein each entry of the entries comprises an input component and a label component, the input component comprising a first set of symbols representing a control information set, the label component comprising the control information set. Alternatively, the input component comprises a first set of symbols representing a control information set and a second set of symbols representing a reference signal.

"First," "Second," etc. as used herein, these terms are used as labels for nouns that they precede, and do not imply any type of ordering (e.g., spatial, temporal, logical) unless explicitly defined as such.

### BRIEF DESCRIPTION OF THE DRAWINGS

The accompanying figures are included to provide a further understanding of examples, and are incorporated in and constitute part of this specification. In the figures:
FIG. 1 is a block diagram illustrating an example radio access network in accordance with an example of the present subject matter;
FIG. 2 is a process flowchart illustrating a method for predicting control information of a control signal according to an example of the present subject matter;
FIG. 3 is a process flowchart illustrating a method for training a machine learning model according to an example of the present subject matter;
FIG. 4A is a block diagram illustrating a neural network-based decision-making system configured to perform a method for predicting control information of a control signal in accordance with an example of the present subject matter;
FIG. 4B is a block diagram illustrating a neural network-based decision-making system configured to perform a method for predicting control information of a control signal in accordance with an example of the present subject matter;
FIG. 5A is a block diagram illustrating a neural network-based decision-making system configured to perform a method for predicting control information of control signals in a multi-user configuration in accordance with an example of the present subject matter;
FIG. 5B is a block diagram illustrating a neural network-based decision-making system configured to perform a method for predicting control information of control signals in a multi-user configuration in accordance with an example of the present subject matter;
FIG. 6 is a block diagram illustrating a deep convolutional neural network (CNN) architecture for predicting control information of a control signal in accordance with an example of the present subject matter;
FIG. 7 is a table that maps combinations of binary input values to specific class labels in accordance with an example of the present subject matter;
FIG. 8 is a process flowchart illustrating a method for predicting control information of a control signal according to an example of the present subject matter; and
FIG. 9 is a block diagram illustrating an example apparatus according to the present subject matter.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may leverage advanced machine learning pattern recognition techniques to reduce errors and improve signal decoding accuracy, unlike conventional methods that are prone to false alarms, while also being adaptable to varying user numbers and supporting diverse control signal formats for broad compatibility across different devices.

A first apparatus may be configured to receive a radio frequency signal. The radio frequency signal may, for example, comprise at least one component serving a specific function. The radio frequency signal may, for example, comprise a first radio frequency signal. This may enable to input a first set of symbols which are obtained from the first radio frequency signal to a machine learning model to obtain the output set.

The inputting feature of inputting at least the first set of symbols to the machine learning model may mean that at minimum, the first set of symbols is provided as input to the machine learning model for it to process and provide an output set. For example, inputting at least the first set of symbols to the machine learning model comprises inputting the first set of symbols to the machine learning model. This inputting feature may also allow for additional symbols to be inputted, which the machine learning model may process to produce the output set. However, the machine learning model in use may have been specifically trained to handle the input type defined by this inputting feature.

Using a control signal as input may allow the machine learning model to focus solely on the specific control aspects, making it easier to analyze and interpret the influence of this control data on the machine learning model's predictions or outputs. This can lead to faster processing times and potentially more straightforward troubleshooting or optimization since the machine learning model deals with fewer variables. The machine learning model may have been trained on a diverse dataset of control signals under various channel conditions, allowing it to identify patterns in the signal that correspond to different environments, thereby ensuring reliable predictions of the control information.

Alternatively, the radio frequency signal may, for example, comprise two distinct components, each serving a different function or characteristic. Specifically, the radio frequency signal may comprise a first radio frequency signal and optionally further comprise a second radio frequency signal. This may enable a single transmission which includes multiple radio frequency signals to carry different types of information. This may enable to input the first set of symbols and a second set of symbols which are obtained from the second radio frequency signal to the machine learning model to obtain the output set. For example, inputting at least the first set of symbols to the machine learning model comprises inputting the first set of symbols and the second set of symbols to the machine learning model.

The present subject matter may thus integrate both reference signal symbols and control signal symbols as inputs to the machine learning model, ensuring that all relevant data is utilized for accurate processing. Indeed, in wireless communication systems, reference signal sequences are carefully allocated within specific time and frequency resources alongside control channel data. This allocation dedicates a portion of the transmission bandwidth and time slot to the reference signal, with the remaining resources allocated for control data. The overall structure of the transmitted radio frequency signal is shaped by this allocation, as it determines how resources are shared between reference signals and control information. Furthermore, the power used for transmission may be shared between the reference signal and control channel data, meaning the total transmission power may be divided between these components. As a result, the presence of the reference signal might slightly reduce the power available for control channel transmission, potentially impacting its coverage and reliability. By accounting for these factors, the present subject matter may ensure that the machine learning model receives comprehensive input, allowing it to make more accurate predictions and adjustments.

Additionally, incorporating both the reference signal and control signal as input to the machine learning model may enable the use of the same input format as classical signal decoding methods. This approach may allow the machine learning model to seamlessly integrate into existing systems, facilitating direct comparison with traditional methods and supporting gradual transition and benchmarking. Additionally, it may leverage historical data and existing datasets for training, accelerating development and allowing the machine learning model to adapt to complex scenarios and future challenges without modifying the data pipeline.

The wireless communication system comprises nodes such as base stations, wherein each node may serve devices located within the node's geographical area of service. The wireless communication system may support one or more radio access technologies (RATs). A radio access technology of the radio access technologies may, for example, be evolved universal terrestrial radio access (E-UTRA), 5G new radio (NR), or a Sixth-generation wireless networks (6G) based system, but it is not limited to, as a person skilled in the art may apply the present subject matter to other wireless communication systems provided with necessary properties. The device may refer to an equipment that connects to and communicates with the wireless communication system to access services and applications provided by the wireless communication system. The device may, for example, be a user equipment. The device may, for example, comprise any one of: a mobile phone, a tablet, an Internet of things (IoT) device, or a laptop.

For example, the first radio frequency signal and the second radio frequency signal may occupy separate components of the overall bandwidth but share the same central radio frequency carrier frequency. The first radio frequency signal and the second radio frequency signal may be allocated time resources within the same time slot (or subframe), such as a Transmission Time Interval (TTI) or another scheduling time interval supported by the radio access technology of the wireless communication system. For example, each of the first radio frequency signal and the second radio frequency signal may occupy its own subcarriers. The first radio frequency signal may represent control information while the second radio frequency signal may represent a specific type of known or reference data. The first radio frequency signal may thus be referred to as control signal. The first radio frequency signal may be encoded using a first modulation scheme. The second radio frequency signal may be encoded using a second modulation scheme. In one example, the first modulation scheme may be the second modulation scheme. Alternatively, the first modulation scheme may be different from the second modulation scheme.

The first radio frequency signal is configured to comprise a control information set. This may involve allocating specific first time and frequency resources for encoding this control information within the radio frequency signal. This allocation may ensure that a portion of the radio frequency signal is dedicated to transmitting control information, which may be crucial for the proper functioning and coordination of the wireless communication system. Control information may include non-user data that may aid in managing the communication process, such as network resource allocation, signal quality indicators, timing information, or commands for managing device connections. However, even when the first radio frequency signal configured to include this control information, there may be instances where the control information is absent, either because it was not transmitted or because it was incorrectly decoded at the receiver, leading to an indication that the control information is missing. For instance, a device might fail to transmit the control information if a control signal is missed or if it ceases monitoring a corresponding trigger signal.

The second radio frequency signal serves as a reference signal, with its own second time and frequency resources allocated for encoding reference information. This reference signal may play a role in providing a known benchmark within the wireless communication system, enabling accurate channel estimation, synchronization, and other functions to ensure reliable data transmission and reception.

In order to decode the received first and second radio frequency signals, the frequency domain of the radio frequency signal may be determined. The frequency domain of the received radio frequency signal may represent the distribution of the signal's power or amplitude across different frequencies, providing insight into its spectral components. Hence, the frequency domain refers to a representation of the radio frequency signal in terms of its frequency components, rather than its variation over time which is the time domain representation. The radio frequency signal may, for example, be converted from the time domain to the frequency domain using a signal preprocessing method that may depend on the radio access technology being adopted by the wireless communication system. The signal preprocessing method may include a transformation through Fourier analysis or similar methods, to isolate and manipulate frequency-specific components of the radio frequency signal. In one example, the signal preprocessing method may involve converting the radio frequency signal into a digital form, and preparing it through synchronization, channel estimation, and demodulation to be in the frequency domain for the subsequent steps of decoding and data extraction. The frequency domain may enable to correctly decode data embedded within the radio frequency signal. The frequency domain of the radio frequency signal may, for example, cover one or more time units. The time unit may, for example, be an Orthogonal Frequency-Division Multiplexing (OFDM) symbol if the wireless communication system utilizes the OFDM technique for receivers.

The frequency domain of the radio frequency signal may be used to analyze the signal's amplitude, phase, or frequency, depending on the first modulation scheme and the allocated first time and frequency resources for the first radio frequency signal. This analysis may enable the radio frequency signal to be mapped back to its corresponding symbols in a constellation diagram. These symbols may be the first set of symbols. For example, each symbol of the first set of symbols may represent a respective subcarrier.

The frequency domain of the radio frequency signal may be used to analyze the signal's amplitude, phase, or frequency based on the second modulation scheme and the allocated second time and frequency resources for the second radio frequency signal. This analysis may enable the radio frequency signal to be mapped back to its corresponding symbols in a constellation diagram. These symbols may be the second set of symbols. For example, each symbol of the second set of symbols may represent a respective subcarrier.

The first set of symbols and the second set of symbols may, for example, be processed using an input generation method to define an input array for a set of one or more devices from which the first apparatus receives the radio frequency signal, as follows.

The first set of symbols may be separated into their real and imaginary components. In one example, for each time unit, the corresponding real and imaginary components may be concatenated sequentially, forming a first array that maintains a time dimension, with the real components followed by the imaginary components for each respective time unit. Alternatively, the real and imaginary components may be interleaved within each time unit to obtain the first array, where the elements alternate between real and imaginary values for each time unit. This approach may allow the preservation of the temporal structure while combining both real and imaginary data into a unified array which is the first array. The first array may thus be provided as a multi-dimensional array. Alternatively, the first array may be reshaped using a reshaping method to obtain a one-dimensional array.

Similarly, the second set of symbols may be separated into their real and imaginary components. In one example, for each time unit, the real and imaginary components may be concatenated sequentially, forming a second array that maintains a time dimension, with the real components followed by the imaginary components for each respective time unit. Alternatively, the real and imaginary components may be interleaved within each time unit to obtain the second array, where the elements alternate between real and imaginary values for each time unit. This approach may allow the preservation of the temporal structure while combining both real and imaginary data into a unified array which is the second array. The second array may thus be provided as a multi-dimensional array. Alternatively, the second array may be reshaped using a reshaping method to obtain a one-dimensional array.

Thus, the input generation method may generate a set of one or more first arrays for the set of one or more devices respectively and a set of one or more second arrays for the set of one or more devices respectively.

The input generation method may provide the input array as follows. The input array may comprise the set of one or more first arrays. Alternatively, the input array may comprise the set of one or more first arrays and the set of one or more second arrays. For example, if the set of devices consists of a single device, the first array and the second array may be concatenated to obtain the input array. If the set of devices comprises multiple devices, the set of first arrays may be concatenated, resulting in a concatenated first array and the set of second arrays may be concatenated, resulting in a concatenated second array, wherein the input array may be obtained by concatenating the concatenated first array and the concatenated second array.

Concatenation of multi-dimensional arrays may involve combining them along a specified axis to create a larger multi-dimensional array. For one-dimensional arrays, this process may involve appending the elements of one vector to the end of another, forming a single, longer vector. However, concatenation, as described here, is just one option for combining inputs in the machine learning model. Alternatively, inputs may be combined using other methods, such as element-wise addition or other combination techniques that provide an input so that the machine learning model may be able to provide the output set based on the input. The choice of combination method may depend on the specific requirements and objectives of the machine learning model.

The input array may be provided as input to the machine learning (ML) model. In response to receiving the input array, the machine learning model may output an output set. This process for obtaining the output set may be referred as demapping. The output set indicates a content of the control information set or a non-transmission event with no control information present. That is, the output set may indicate the presence of the control information set. In case the configuration set is provided by multiple devices and thus comprises multiple configuration subsets, the presence of the configuration set indicates whether each individual configuration subset within the set is present or absent. In case a configuration subset is present, the output set may indicate the content of the configuration subset; otherwise, it may indicate a non-transmission event for that configuration subset.

According to one example, the first apparatus may be configured to receive the radio frequency signal from a set of one or more devices. If the set of devices consists of a single device, the control information set includes control information provided by that device, and the output set may indicate the content of the control information or a non-transmission event when no control information is present. If the set of devices comprises multiple devices, the control information set includes a control information subset for each device in the set of devices. The output set then comprises an output subset for each device, with each output subset indicating the content of the corresponding control information or a non-transmission event. For example, each device in the set of devices may either be associated with a non-transmission event, resulting from no control information in the first radio frequency signal, or the control information may be successfully transmitted and included in the first radio frequency signal. For example, if the set of devices is 4 devices, the output set may comprise control information for three devices and one non-transmission event for the fourth device or comprise control information for two devices and two non-transmission events for the two other devices and so forth.

In the following, for simplicity, if the set of devices providing the radio frequency signal consists of a single device, the terms 'output subset' and 'configuration subset' will refer to the entire output set and configuration set, respectively.

If the set of devices comprises multiple devices, the radio frequency signal may comprise a set of individual radio frequency signals which are received by the first apparatus from the set of devices respectively, wherein each individual radio frequency signal comprises a first individual radio frequency signal comprising a corresponding control information subset and a second individual radio frequency signal being a reference signal.

Simultaneously processing multiple devices using one signal may significantly reduce overall processing time by handling multiple devices in parallel rather than sequentially. This approach may enhance synchronization, ensuring that data from different devices is processed within a consistent time frame, which may be crucial for applications requiring real-time analysis or coordination between devices. Overall, simultaneous processing may improve speed, consistency, and resource utilization.

According to one example, the first apparatus is a network component of a wireless network of the wireless communication system. The network component serves the set of devices. The network component may, for example, be a node of the wireless communication system such as a gNodeB. The received radio frequency signal may thus be an uplink signal.

A network component that processes signals from wireless devices may offer key advantages, including centralized data processing for efficient management, real-time monitoring, and enhanced scalability.

According to one example, the non-transmission event being a Discontinuous Transmission (DTX) event.

The DTX event for a given device may mean that the given device does not send any signals during a period defined by the DTX event, which may help conserve power and reduce interference on the network. This may be used in wireless communication systems where constant transmission is unnecessary, especially during periods of silence or inactivity. In one alternative example, the non-transmission event may result from the given device being in power saving mode, idle mode, or sleep mode, all of which are techniques which may be used in wireless communication systems to conserve energy. The power saving mode may allow the device to stay registered with the network in a low-power state, transmitting or receiving data only when necessary. Idle mode may keep the device connected without active data transmission, ready to switch to active mode when needed. Sleep mode may temporarily shut down the device's radio components to save power, with the device periodically waking up to check for signals or data.

According to one example, the machine learning model is a classifier, wherein each output subset comprises a predicted class label of predefined class labels. The class label of each output subset may have a first value of a predefined set of first values or a second value. Each first value represents a control information subset for the device. The second value represents a non-transmission event.

ML classifiers can automatically learn patterns from data, making them highly adaptable to complex and non-linear relationships that may be difficult to capture with traditional rule-based systems. ML classifiers may also be flexible, allowing for the use of different algorithms (like decision trees, neural networks, or support array machines), which can optimize performance for specific conditions.

Alternatives to using a ML classifier, the machine learning model may be obtained by unsupervised learning methods, reinforcement learning, or clustering algorithms. Unsupervised learning methods, like clustering (e.g., K-means or hierarchical clustering), may group similar data points without predefined labels, which may be useful for exploring data structure or discovering patterns. Reinforcement learning may involve training the machine learning model as an agent to make decisions through trial and error, optimizing for long-term rewards, which may be advantageous for dynamic environments like wireless communication systems.

According to one example, each control information subset is encoded in a set of n bits, n being a positive integer, wherein the predefined class labels comprise a label per distinct n-bit binary value of the set of n bits and a label for the non-transmission event. The class labels which are associated with the distinct n-bit binary values may be referred to as first type class labels.

For example, if the set of bits are two bits (n=2), the predefined class labels may comprise four distinct two(2)-bit binary values 00, 01, 10, 11 and a fifth label for the non-transmission event. The number n of bits may also be referred to as M_bit.

The advantage of encoding each control information subset in a set of n bits, where the predefined class labels include a label for each distinct n-bit binary value and a label for the non-transmission event, may lie in its efficient and structured approach to data representation and transmission. This method may allow for clear and distinct identification of different control information subsets, ensuring that each possible n-bit combination is uniquely labeled. It may also account for non-transmission events, providing a comprehensive system that can handle both active and inactive transmission states.

In one example, the first apparatus may be configured to determine the content of the control information subset by using an association between each class label and the corresponding control information. These associations may be defined for distinct numbers of bits M_bit. For example, if there are 3 class labels and four distinct numbers of bits (e.g., M_bit=1, 2, 3 and 4), then for each distinct number of bits, three associations may be provided for the 3 labels, resulting in a total of twelve associations. For instance, for an output subset that is obtained for a given device, the predicted class label comprised in the output subset may be linked to control information based on the corresponding association. This linked control information may provide the content of the control information subset provided by the given device.

The associations may, for example, be implemented using software code, such as conditional statements, or provided as data structures or maps.

However, depending on the first modulation scheme, each class label of one or more specific class labels of the first type of class labels may be derived from a radio frequency signal that could be identical for different control information encoded with varying numbers of bits. For example, in a Quadrature Phase-Shift Keying (QPSK) modulation, the bit pairs '0' and '00' might produce the same radio frequency signal, as would the bit pairs '1' and '11'. The present subject matter may solve this issue. According to one example, the first apparatus may be configured to receive the number of bits M_bit used by the set of devices in advance before receiving the radio frequency signal. In this case, for each specific class label, the first apparatus may determine the content of the corresponding control information subset by, for example, referencing the *known* number of bits M_bit and applying the corresponding association to link the class label to the content of the control information. That is, for each specific class label in the output set, the first apparatus may be configured to select using the number of bits M_bit an association between the specific class label and corresponding distinct n-bit binary value and use the selected association to determine the n-bit binary value associated with the specific class label.

In one example, the one or more specific class labels may be the first type of class labels. Alternatively, the one or more specific class labels may be selected from the first type of class labels. The selection may, for example, be based on a condition that a radio frequency signal, for which the specific class label is obtained, could be identical for different control information encoded with varying numbers of bits.

According to one example, the first radio frequency signal comprises cyclically shifted first individual radio frequency signals, wherein the machine learning model is configured to further receive as input cyclic shifts associated with the set of devices. The set of devices may transmit their respective first individual radio frequency signals, each derived through cyclic shift associated with the corresponding device. Each first individual radio frequency signal of the first individual radio frequency signals comprises a respective control information subset.

This example may enhance the machine learning model's ability to distinguish and analyze signals from multiple devices. Cyclic shifts may help in separating overlapping signals and reducing interference, allowing the machine learning model to more accurately identify and process each device's signal. This approach may increase the robustness of signal detection in the presence of multiple devices transmitting simultaneously.

According to one example, the machine learning model is a Convolutional Neural Network (CNN). The CNN comprises an input layer. The input layer comprises a first reshaping layer for receiving the first set of symbols and a second reshaping layer for receiving the second set of symbols. The first and second reshaping layers may provide reshaped first set and reshaped second set of symbols respectively. Reshaping may, for example, comprise changing the structure or dimensions of the set of symbols so that it can be processed by the CNN. The input layer is configured to output an array (e.g., concatenated array) representing the first set of symbols and second set of symbols. The concatenated array may, for example, result from a concatenation of the reshaped first set of symbols and the reshaped second set of symbols. In response to receiving as input the first and second sets of symbols, the CNN output layer may provide as output the output set as described herein. For example, if the input sets of symbols represent one device from which the RF signal is received and the control information subset for the device is encoded in 2 bits, the output of the CNN may comprise five probability values associated with the five class labels, namely the fourth 2-bit binary values 00, 01, 10, 11 and the fifth label for the non-transmission event. For example, to generate the output set, the CNN may branch into two pathways, each passing through processing layers (e.g., such as dense and activation layers), with one pathway providing a probability value for the non-transmission event, and the other pathway producing four probabilities corresponding to the remaining four classes.

Using CNNs as classifiers may offer significant advantages, including automatic feature extraction, where the network learns to identify patterns like edges and textures without manual input. CNNs may also maintain time-frequency relationships in data, allowing for accurate pattern recognition regardless of signal position, which may be advantageous in the present task. CNNs may be parameter-efficient due to shared weights, making them scalable and effective for high-dimensional data such as for multiple users.

Reshaping layers in the CNN may ensure that data is formatted correctly for subsequent layers. They align the dimensions of data, making it compatible with layers that require specific input shapes, such as dense layers. Additionally, reshaping layers may provide flexibility in network design, allowing different architectures to be constructed and optimized for effective model performance.

Alternatively, the CNN may be configured to receive as input the first set of symbols, so the input layer may provide an array representing the first set of symbols. In response to receiving as input the first set of symbols, the CNN output layer may provide as output the output set as described herein.

In one example implementation of the CNN, the input set(s) of symbols to the CNN may, for example, be processed with the input generation method before providing the resulting respective array(s) as input to the CNN e.g., each set of symbols may be represented by an array which is obtained by the input generation method and then fed as input to the respective reshaping layer of the CNN.

Alternatively, the machine learning model may be a transformer. The first set of symbols and the second set of symbols may be provided in a concatenated format and fed as input to the transformer. The concatenation may for example further comprise a flattering of the entire sets to one dimensional array. Alternatively, the transformer may receive as input the first set of symbols. Given that the symbols may already be represented numerically, tokenization as with string type inputs may not be performed by the transformer. Instead, the values in the array may be scaled by a large number N and then each value may be rounded to the nearest integer, resulting in a quantized sequence. The scaling or quantization may, for example, enable to obtain values from the symbols with a certain level of discretization, ensuring that the symbols align with predefined discrete levels. The number N may be equivalent to a dictionary size, where the dictionary size may, for example, represent the range of possible quantized values that the symbols can take after scaling. The quantized sequence may be fed directly to a positional encoder of the transformer. The transformer may then be capable of inferring the relations between the elements of the sequence thanks to the positional encoding and attention mechanisms. The output of the transformer may provide the output set. For example, if the input set(s) of symbols represent one device from which the RF signal is received and the control information subset for the device is encoded in 2 bits, the output of the transformer may comprise five probability values associated with the five class labels, namely the fourth 2-bit binary values 00, 01, 10, 11 and the fifth label for the non-transmission event. The class with the highest probability may, for example, be deemed to be the detected class. In another example, instead of flattening the concatenated symbols to an array, the sets of symbols may be treated as an image in case the transformer is provided as a vision transformer. The image may be split in smaller portions which are fed into the embedding layer of the vision transformer.

In one example implementation of the transformer, the input set(s) of symbols to the transformer may, for example, be processed with the input generation method before providing the resulting respective array(s) as input to the transformer e.g. so the scaling and the further operations of the transformer may be performed to provie the output.

According to one example, the first radio frequency signal is encoded in time-frequency resources which are allocated for a PUCCH.

This may ensure efficient and reliable communication of control information between the set of devices and the first apparatus. The PUCCH is specifically designed for transmitting uplink control information, providing dedicated resources that are optimized for low-latency and robust transmission. Additionally, using the PUCCH's resources may help maintain the organization of the network's time-frequency structure, leading to more efficient spectrum utilization.

The PUCHH may have a format. The format may define the structure and content of the control information transmitted by the device with possible values including Format 0 for transmitting one(1)-bit or 2-bit acknowledgments, Format 1 for 1-bit or 2-bit scheduling requests, Format 2 for Channel State Information (CSI) feedback, Format 3 for multi-bit acknowledgments, and Format 4 for carrying up to 2-bit acknowledgments along with CSI feedback.

According to one example, the second radio frequency signal is a Demodulation Reference Signal (DMRS), or any reference signal that enables extraction of the first set of symbols from the first radio frequency signal.

DMRS sequences may specifically be allocated within certain time and frequency resources alongside the PUCCH. This allocation may mean that part of the transmission bandwidth and time slot is reserved for DMRS, while the rest is used for PUCCH. The overall structure of the transmitted radio frequency signal may thus be influenced by the presence of DMRS, as it may dictate how the available resources are shared between reference signals and control data. The present subject matter may take into account this as it provides both the DMRS symbols as well as the symbols of the control signal as input to the machine learning model.

The present subject matter may enable to obtain the machine learning model using the second apparatus and the training method. The second apparatus may be the first apparatus, meaning that the training and the inference of the machine learning model may be performed at the same apparatus. Alternatively, the second apparatus may not be the first apparatus. The first apparatus may be configured to access or receive the machine learning model from the second apparatus after the machine learning model has been trained.

For example, a training dataset may be collected, where in each entry of the training dataset a data point (which is an example of the input component) is paired with a correct output (label). The data point may comprise a first set of symbols representing a control information set. The ML model may be initialized, and the training process begins by feeding the training data through the ML model. During each iteration, the ML model makes predictions based on an input array, which are compared to the actual labels using a loss function to measure the error. The loss function may, for example, be a categorical cross entropy loss function. The input array may comprise the first set of symbols. The model's parameters are adjusted to minimize this error, e.g., using an optimization algorithm like gradient descent. This process is repeated over many iterations until the model's performance on the training data is satisfactory. The machine learning model may be evaluated on a validation set to ensure it generalizes well to unseen data, and adjustments may be made as necessary to prevent overfitting.

In another example, a training dataset may be collected, where in each entry of the training dataset a data point (which is an example of the input component) is paired with a correct output (label). The data point may comprise a first set of symbols representing a control information set and a second set of symbols representing a reference signal. The ML model may be initialized, and the training process begins by feeding the training data through the ML model. During each iteration, the ML model makes predictions based on an input array, which are compared to the actual labels using a loss function to measure the error. The loss function may, for example, be a categorical cross entropy loss function. The input array may be obtained from the first set of symbols and the second set of symbols using the input generation method. The model's parameters are adjusted to minimize this error, e.g., using an optimization algorithm like gradient descent. This process is repeated over many iterations until the model's performance on the training data is satisfactory. The machine learning model may be evaluated on a validation set to ensure it generalizes well to unseen data, and adjustments may be made as necessary to prevent overfitting.

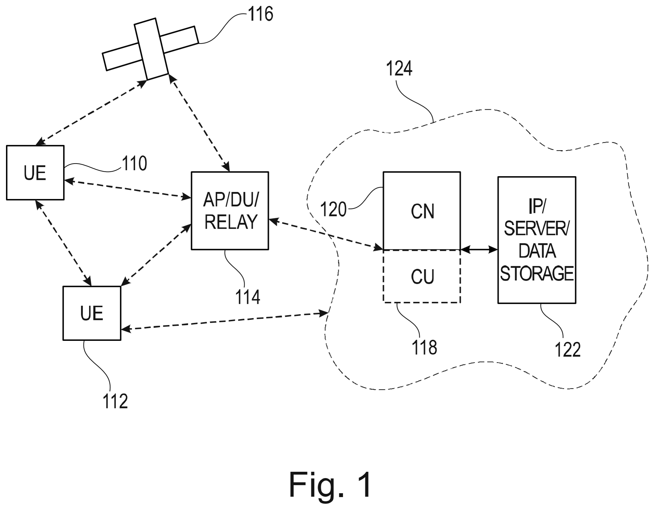

**FIG. 1** is a block diagram illustrating an example radio access network in accordance with an example of the present subject matter. FIG. 1 illustrates examples of simplified system architectures only showing some elements and functional entities, all being logical units, whose implementation may differ from what is shown. The connections illustrated in FIG.1 are logical connections; the actual physical connections may be different. It is apparent to a person skilled in the art that the system typically comprises also other functions and structures than those illustrated in FIG.1.

The embodiments are not, however, restricted to the system given as an example but a person skilled in the art may apply the solution to other communication systems provided with necessary properties.

The example radio access network illustrated in FIG.1 includes devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to devices. The antenna unit may comprise a plurality of antennas or antenna elements. The (e/g)NodeB is further connected to the core network 120 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in loT network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all illustrated in FIG. 1) may be implemented.

5G enables using Multiple Input Multiple Output (MIMO) antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require bringing the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. The MEC structure also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, loT (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is illustrated in FIG.1 using "cloud" 124). The communication system may also comprise a central control entity, or a like, providing facilities for networks of different operators to cooperate for example in spectrum sharing.

The technology of edge cloud may be brought into a radio access network (RAN) by utilizing network function virtualization (NVF) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 114) and non-real time functions being carried out in a centralized manner (in a centralized unit, CU 118).

It should also be understood that the distribution of labor between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (NB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NBs, the device may have an access to a plurality of radio cells and the system may comprise also other apparatuses, such as physical layer relay nodes or other network elements, etc. One of the (e/g)NBs may be a Home(e/g)NB (H(e/g)NBs). Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NBs are required to provide such a network structure.

For fulfilling the need for improving the deployment and performance of communication systems, the concept of "plug-and-play" (e/g)NBs has been introduced. Typically, a network which is able to use "plug-and-play" (e/g)NBs, includes, in addition to H(e/g)NBs, a home nodeB gateway, or HNB-GW (not illustrated in FIG.1). A HNB-GW, which is typically installed within an operator's network, may aggregate traffic from a large number of HNBs back to a core network.

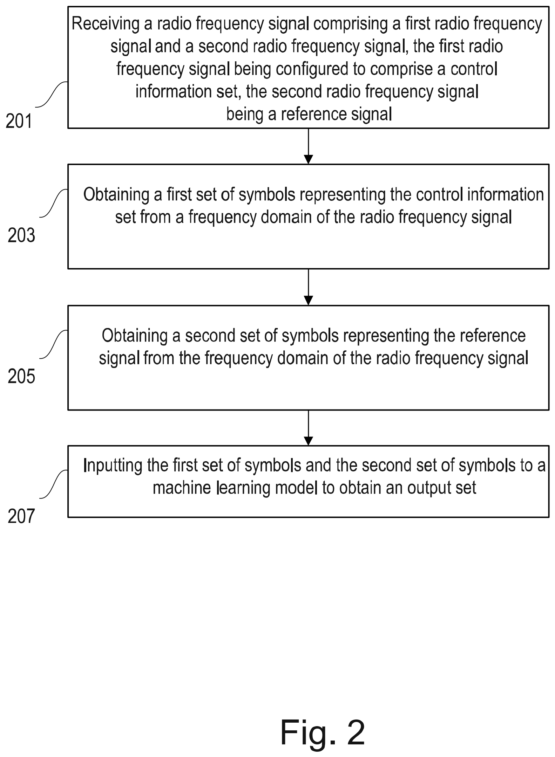

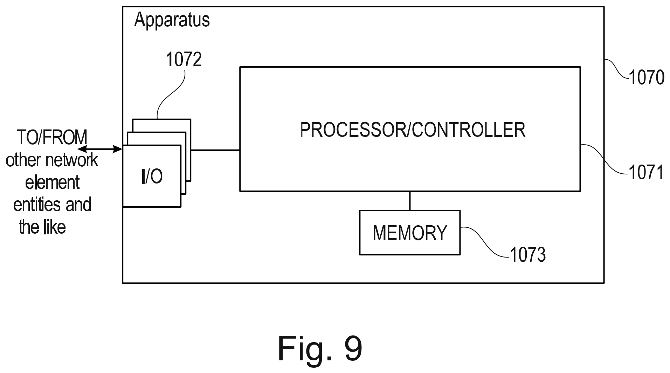

**FIG. 2** is a process flowchart illustrating a method according to an example of the present subject matter. For the purpose of explanation, the method described in reference to FIG. 2 may be implemented in a first apparatus such as the node 114 illustrated and described in reference to FIG. 1 or apparatus illustrated and described in reference to FIG. 9 but is not limited to this implementation.

A radio frequency signal may be received at block 201. The radio frequency signal comprises a first radio frequency signal and a second radio frequency signal. The first radio frequency signal is configured to comprise a control information set. The second radio frequency signal is a reference signal.

A first set of symbols may be obtained (e.g., derived) at block 203 from a frequency domain of the radio frequency signal. The first set of symbols may represent the control information set.

A second set of symbols may be obtained (e.g., derived) at block 205 from the frequency domain of the radio frequency signal. The second set of symbols may represent the reference signal.

The first set of symbols and the second set of symbols may be input at block 207 to a machine learning model to obtain an output set from the machine learning model. The output set indicates a content of the control information set or a non-transmission event with no control information present.

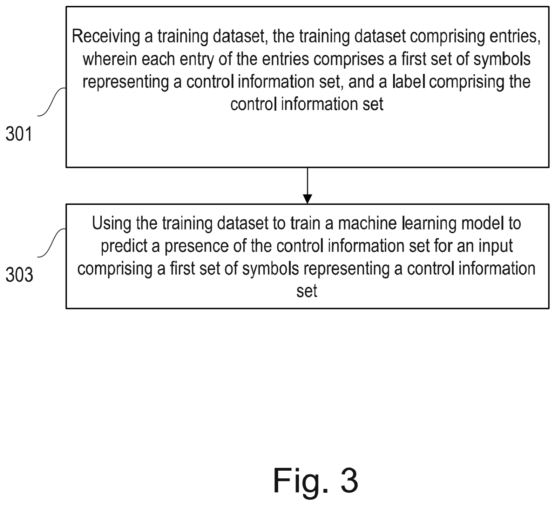

**FIG. 3** is a process flowchart illustrating a training method according to an example of the present subject matter. For the purpose of explanation, the method described in reference to FIG. 3 may be implemented in a second apparatus such as the apparatus illustrated and described in reference to FIG. 9 but is not limited to this implementation.

A training dataset may be received at block 301. The training dataset comprises entries, wherein each entry of the entries comprises an input component and a label component. The input component comprises a first set of symbols representing a control information set. In an alternative training method, the input component comprises a first set of symbols representing a control information set and a second set of symbols representing a reference signal. The label component comprises the control information set.

At block 303, the training dataset may be used to train a machine learning model to predict a presence of the control information set for an input comprising a first set of symbols representing a control information set. In the alternative training method, the training dataset may be used to train a machine learning model to predict a presence of the control information set for an input comprising a first set of symbols representing a control information set and a second set of symbols representing a reference signal.

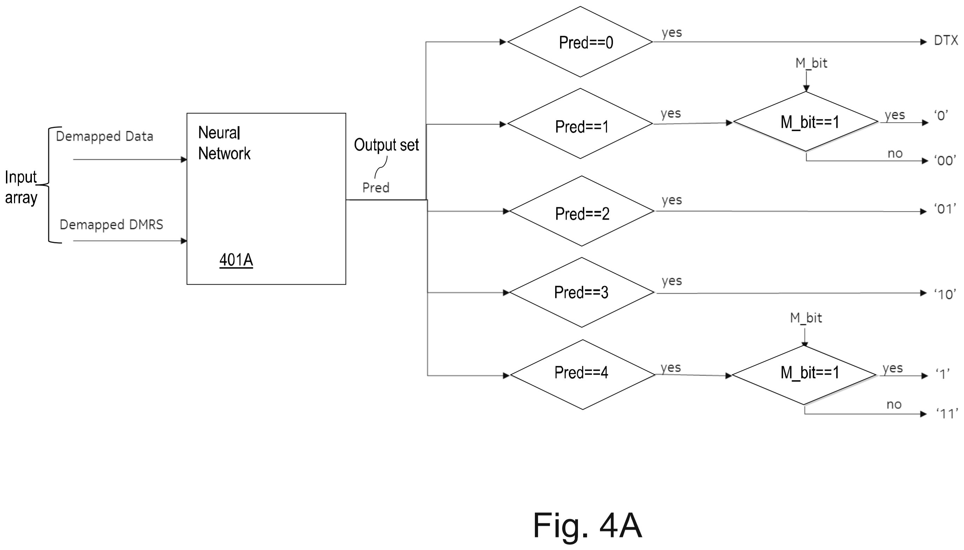

**FIG. 4A** is a block diagram illustrating a neural network-based decision-making system configured to perform a method for predicting control information of a control signal in accordance with an example of the present subject matter.

In particular, the diagram illustrates a decision-making flowchart that utilizes a neural network 401A to generate predictions forming an output set, labeled "Pred," which are then processed through a series of conditional checks. The input array to the neural network 401A includes demapped data symbols and demapped DMRS symbols. After the neural network 401A processes the input array, it outputs an output set comprising a prediction, "Pred," which may take values from 0 to 4. Each prediction value is associated with a different path in the flowchart. For "Pred=0," the process directly leads to an output labeled "DTX" indicating that no control information is obtained and/or transmitted in the control signal. For "Pred=1," the flow branches based on a conditional check of the number of bits M_bit; if M_bit equals 1, the output is "0"; otherwise, it is "00", with "0" or "00" representing the control information. Similarly, for "Pred=2," the output is "01," and for "Pred=3," the output is "10", with "01" and "10" representing the control information. When "Pred=4" is predicted, another conditional check is performed on the number of bits M_bit; if M_bit equals 1, the output is "1"; otherwise, it is "11", with "1" and "11" representing the control information. This flowchart demonstrates a structured process where the neural network's predictions are used to direct the flow through various branches, potentially involving further logical checks before arriving at a final binary-coded output which represents the control information in the control signal.

The neural network-based decision-making system may, for example, be part of the first apparatus. The first apparatus may use the network-based decision-making system to determine the output set for a radio frequency signal which is received from a single device and comprises first and second radio frequency signals representing control data and reference data respectively.

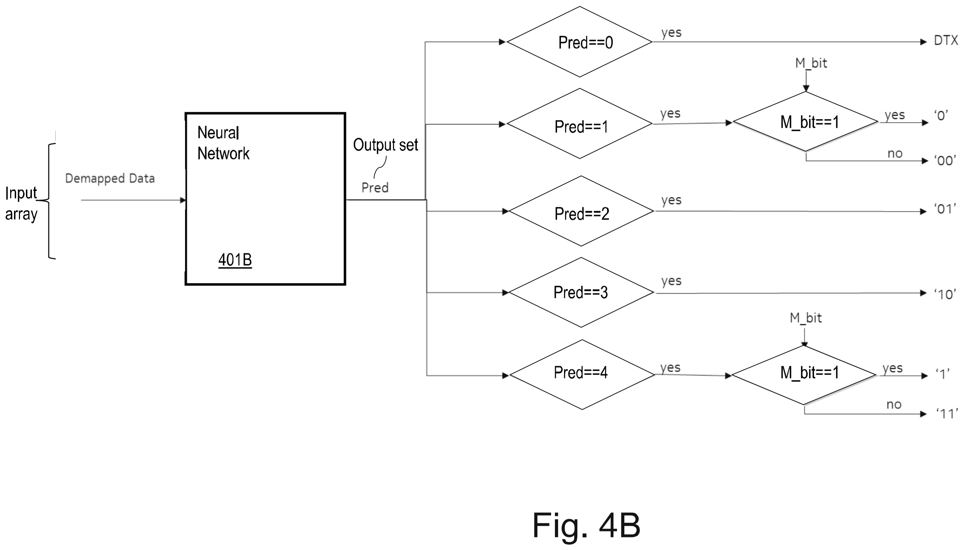

**FIG. 4B** is a block diagram illustrating a neural network-based decision-making system configured to perform a method for predicting control information of a control signal in accordance with an example of the present subject matter.

In particular, the diagram illustrates a decision-making flowchart that utilizes a neural network 401B to generate predictions forming an output set, labeled "Pred," which are then processed through a series of conditional checks. The neural network 401B includes demapped data symbols. After the neural network 401B processes the input array, it outputs an output set comprising a prediction, "Pred," which may take values from 0 to 4. Each prediction value is associated with a different path in the flowchart. For "Pred=0," the process directly leads to an output labeled "DTX" indicating that no control information is obtained and/or transmitted in the control signal. For "Pred=1," the flow branches based on a conditional check of the number of bits M_bit; if M_bit equals 1, the output is "0"; otherwise, it is "00", with "0" or "00" representing the control information. Similarly, for "Pred=2," the output is "01," and for "Pred=3," the output is "10", with "01" and "10" representing the control information. When "Pred=4" is predicted, another conditional check is performed on the number of bits M_bit; if M_bit equals 1, the output is "1"; otherwise, it is "11", with "1" and "11" representing the control information. This flowchart demonstrates a structured process where the neural network's predictions are used to direct the flow through various branches, potentially involving further logical checks before arriving at a final binary-coded output which represents the control information in the control signal.

The neural network-based decision-making system may, for example, be part of the first apparatus. The first apparatus may use the network-based decision-making system to determine the output set for a radio frequency signal which is received from a single device and comprises a first radio frequency signal representing control data.

The neural network-based decision-making system in FIG. 4B offers an alternative to the neural network-based decision-making system in FIG. 4A, differing in that the neural network 401B receives only the demapped data symbols as input, whereas the neural network 401A receives both the demapped data symbols and demapped DMRS symbols as input. In addition, the neural network 401B may have been trained with a training dataset comprising entries, wherein each entry of the entries comprises an input component and a label component. The input component comprises demappted data symbols representing control information, and the label component comprises the control information. The neural network 401A may have been trained with a training dataset comprising entries, wherein each entry of the entries comprises an input component and a label component. The input component comprises demappted data symbols representing control information and demapped DMRS symbols, and the label component comprises the control information.

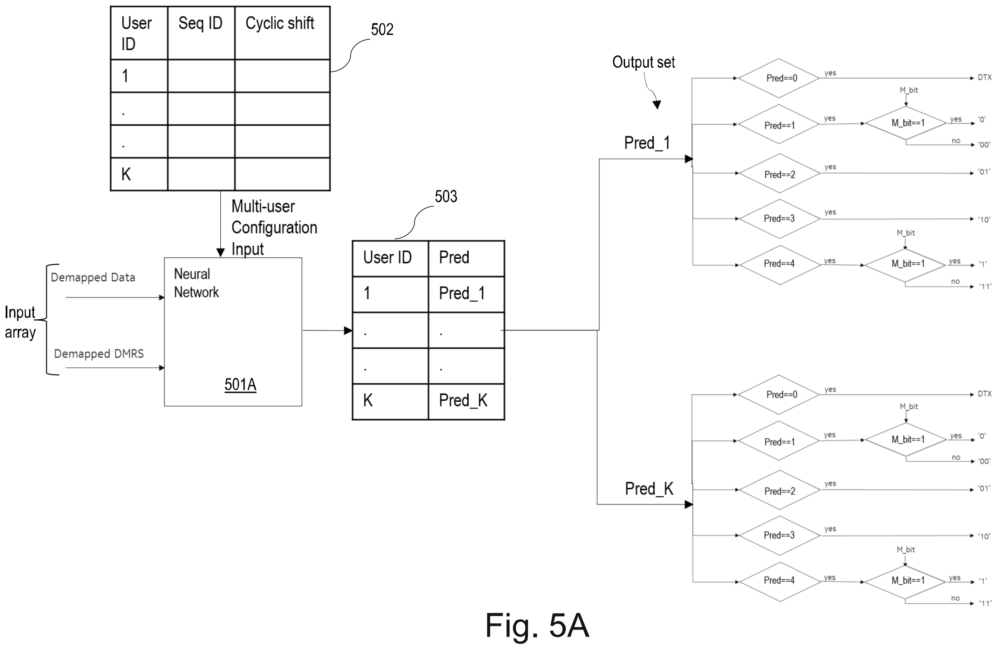

**FIG. 5A** is a block diagram illustrating a neural network-based decision-making system configured to perform a method for predicting control information of control signals in a multi-user configuration in accordance with an example of the present subject matter. The method begins with input data that includes a number K of user IDs, K sequence IDs, and K cyclic shifts which is organized into a multi-user configuration table 502. The K sequence IDs and the K cyclic shifts may be used by a set of K devices to generate a set of K reference signals respectively. This configuration table 502, along with the input array including the demapped data symbols and demapped DMRS symbols is fed into a neural network 501A. The neural network 501A processes these inputs and generates an output set comprising a set of predictions, labeled as "Pred_1" through "Pred_K," corresponding to each user ID from 1 to K. The predictions are then output into a table 503 alongside their respective user IDs. Following this, each prediction is processed through individual decision trees or flow diagrams that branch based on different conditional checks as described with reference to FIG. 4A. For example, the output of the neural network 501A may be a vector, where the method of FIG. 4A may be run for each element of the vector individually. Each user-specific prediction (Pred_1 to Pred_K) leads to different paths depending on the conditions evaluated in these flowcharts, which involve logical decisions that direct the flow toward different outcomes. This system may thus be designed for multi-user environments, where predictions made by the neural network 501A are tailored and processed individually for each user based on the initial configuration and conditions.

The neural network-based decision-making system may, for example, be part of the first apparatus. The first apparatus may use the network-based decision-making system to determine the output set for a radio frequency signal which is received from multiple devices and comprises first and second radio frequency signals representing control data and reference data respectively.

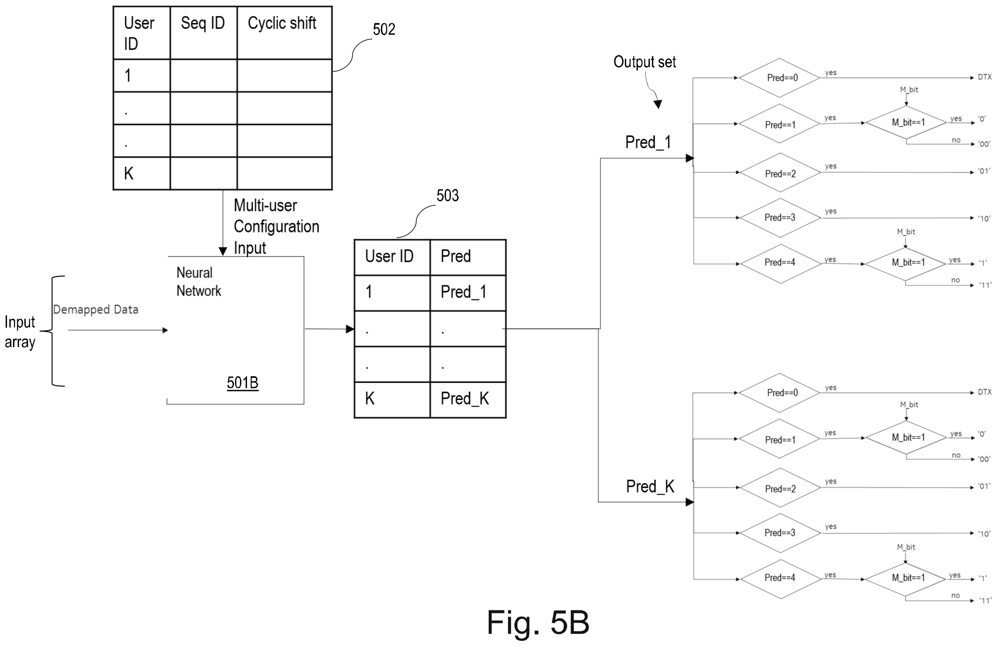

**FIG. 5B** is a block diagram illustrating a neural network-based decision-making system configured to perform a method for predicting control information of control signals in a multi-user configuration in accordance with an example of the present subject matter. The method begins with input data that includes a number K of user IDs, K sequence IDs, and K cyclic shifts which is organized into a multi-user configuration table 502. The K sequence IDs and the K cyclic shifts may be used by a set of K devices to generate a set of K reference signals respectively. This configuration table 502, along with the input array including the demapped data symbols and demapped DMRS symbols is fed into a neural network 501B. The neural network 501B processes these inputs and generates an output set comprising a set of predictions, labeled as "Pred_1" through "Pred_K," corresponding to each user ID from 1 to K. The predictions are then output into a table 503 alongside their respective user IDs. Following this, each prediction is processed through individual decision trees or flow diagrams that branch based on different conditional checks as described with reference to FIG. 4B. For example, the output of the neural network 501B may be a vector, where the method of FIG. 4B may be run for each element of the vector individually. Each user-specific prediction (Pred_1 to Pred_K) leads to different paths depending on the conditions evaluated in these flowcharts, which involve logical decisions that direct the flow toward different outcomes. This system may thus be designed for multi-user environments, where predictions made by the neural network 501B are tailored and processed individually for each user based on the initial configuration and conditions.

The neural network-based decision-making system may, for example, be part of the first apparatus. The first apparatus may use the network-based decision-making system to determine the output set for a radio frequency signal which is received from multiple devices and comprises a first radio frequency signal representing control data.

The neural network-based decision-making system in FIG. 5B offers an alternative to the neural network-based decision-making system in FIG. 5A, differing in that the neural network 501B receives only the demapped data symbols as input, whereas the neural network 501A receives both the demapped data symbols and demapped DMRS symbols as input. In addition, the neural network 501B may have been trained with a training dataset comprising entries, wherein each entry of the entries comprises an input component and a label component. The input component comprises demappted data symbols representing control information and configuration table such as configuration table 502, and the label component comprises the control information. The neural network 501A may have been trained with a training dataset comprising entries, wherein each entry of the entries comprises an input component and a label component. The input component comprises demappted data symbols representing control information, demapped DMRS symbols and configuration table such as configuration table 502, and the label component comprises the control information.

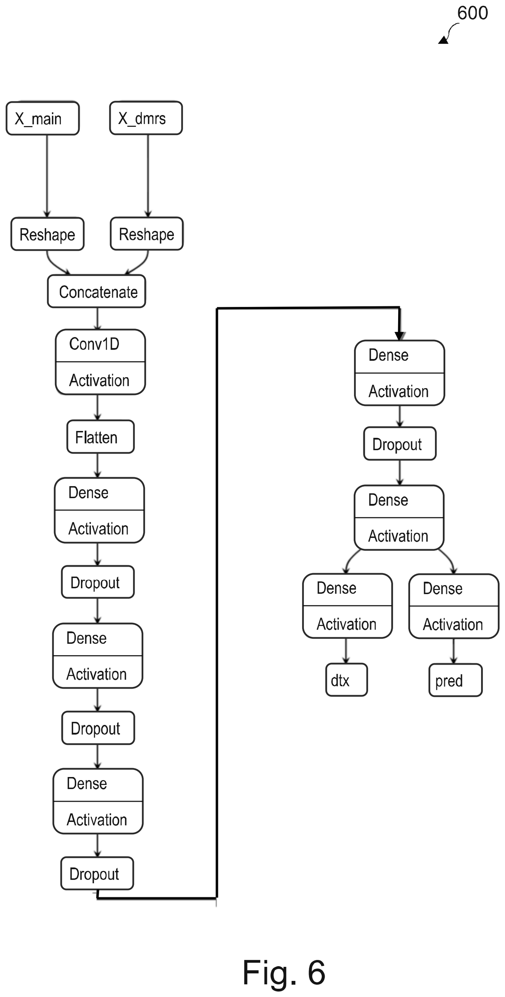

**FIG. 6** is a diagram illustrating a deep CNN architecture for predicting control information of a control signal according to an example of the present subject matter. The CNN 600 is configured for processing two multi-dimensional input tensors, labeled X_main and X_dmrs. The input tensor X_main may provide an example of the first array while the input tensor X_dmrs may provide an example of the second array. The inputs first pass through Reshape layers to reorganize the data, which are then concatenated into a single tensor. This combined tensor is processed by a 1D convolutional layer (Conv1D), followed by an activation function, such as ReLU, to introduce non-linearity. The output is then flattened into a 1D array, which flows through a sequence of Dense (fully connected) layers, each followed by an activation function and interspersed with Dropout layers to prevent overfitting. The architecture then branches into two pathways: one leading, through additional Dense and Activation layers, to an auxiliary output labeled "dtx", and the other continuing through additional Dense and Activation layers to produce another output labeled "pred". This network structure, which integrates convolutional layers for feature extraction and dense layers for decision-making, may be suitable for the present task where multiple input streams may be processed and combined. The output "pred" may provide an example of the first type class label while "dtx" may be the label indicating the non-transmission event.

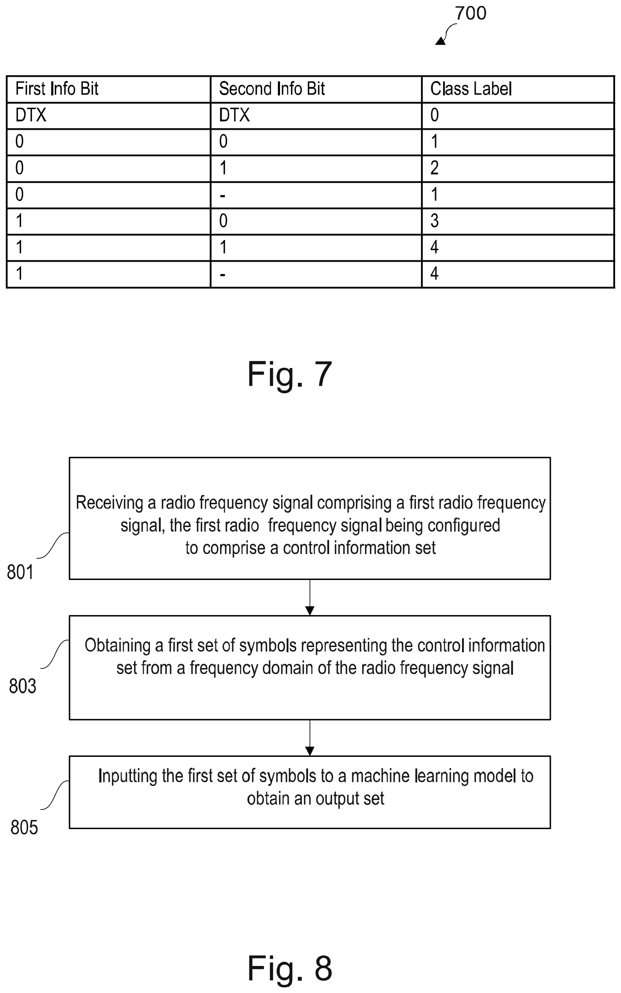

**FIG. 7** shows a table 700 that maps two-bit binary values to specific class labels. The table 700 has three columns: "First Info Bit," "Second Info Bit," and "Class Label." The first row uses "DTX" as a placeholder value under both "First Info Bit" and "Second Info Bit," corresponding to a class label of 0 indicating a non-transmission event. Subsequent rows illustrate various combinations of binary values for these two bits which provide examples of control information. When both "First Info Bit" and "Second Info Bit" are 0, the class label is 1. When "First Info Bit" is 0 and "Second Info Bit" is 1, the class label is 2. For "First Info Bit" as 0 and "Second Info Bit" as a dash (which might indicate an unknown state), the class label is 1. When "First Info Bit" is 1 and "Second Info Bit" is 0, the class label is 3. If both bits are 1, the class label is 4, and this same class label applies even when "Second Info Bit" is unspecified (dash). The table 700 outlines a map or data structure where specific combinations of input bits are mapped to predefined class labels, for use in a classification by the machine learning model according to the present subject matter. The table 700 may provide an example implementation of the associations for the set of two bits (M_bit=2).

**FIG. 8** is a process flowchart illustrating a method according to an example of the present subject matter. For the purpose of explanation, the method described in reference to FIG. 8 may be implemented in a first apparatus such as the node 114 illustrated and described in reference to FIG. 1 or apparatus illustrated and described in reference to FIG. 9 but is not limited to this implementation.

A radio frequency signal may be received at block 801. The radio frequency signal comprises a first radio frequency signal. The first radio frequency signal is configured to comprise a control information set.

A first set of symbols may be obtained (e.g., derived) at block 803 from a frequency domain of the radio frequency signal. The first set of symbols may represent the control information set.

The first set of symbols may be input at block 805 to a machine learning model to obtain an output set from the machine learning model. The output set indicates a content of the control information set or a non-transmission event with no control information present.

In **FIG. 9****,** a block circuit diagram illustrating a configuration of an apparatus 1070 is shown, wherein the apparatus 1070 is configured to implement at least part of the present subject matter. It is to be noted that the apparatus 1070 illustrated in FIG. 9 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform the method as described in reference to FIG. 1, or 2.

For example, the processor 1071 is configured for: receiving a radio frequency signal comprising a first radio frequency signal, the first radio frequency signal being configured to comprise a control information set; obtaining a first set of symbols representing the control information set from a frequency domain of the radio frequency signal; inputting at least the first set of symbols to a machine learning model to obtain an output set, wherein the output set indicates a content of the control information set or a non-transmission event with no control information present.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. An apparatus for a wireless communication system, the apparatus comprising at least one processor; and at least one memory storing instructions that, when executed by the at least one processor, cause the apparatus to perform:
receive (201) a radio frequency signal comprising a first radio frequency signal, the first radio frequency signal being configured to comprise a control information set;
obtain (203) a first set of symbols representing the control information set from a frequency domain of the radio frequency signal;
input (207) at least the first set of symbols to a machine learning model to obtain an output set, wherein the output set indicates a content of the control information set or a non-transmission event with no control information present, the non-transmission event being a Discontinuous Transmission (DTX) event, wherein the radio frequency signal further comprises a second radio frequency signal, the second radio frequency signal being a reference signal, wherein execution of the instructions further causes the apparatus to obtain (205) a second set of symbols representing the reference signal from the frequency domain of the radio frequency signal, further input the second set of symbols to the machine learning model to obtain the output set.

2. The apparatus of claim 1, wherein execution of the instructions further causes the apparatus to receive the radio frequency signal from a set of one or more devices, the control information set comprising a control information subset per device of the set of devices, wherein the output set comprises an output subset per device of the set of devices indicating a content of the corresponding control information subset or a non-transmission event with no control information present.

3. The apparatus of claim 1 or 2, the apparatus being a network component of a wireless network of the wireless communication system, the network component serving the set of devices.

4. The apparatus of any of the preceding claims 2 to 3, the machine learning model being a classifier, wherein each output subset comprises a predicted class label of predefined class labels.

5. The apparatus of claim 4, each control information subset being encoded in a set of n bits, n being a positive integer, wherein the predefined class labels comprise a label per distinct n-bit binary value of the set of n bits and a label for the non-transmission event.

6. The apparatus of claim 5, wherein execution of the instructions further causes the apparatus to: receive the number n of bits before receiving the radio frequency signal; and for a specific class label in the output set, select using the number n of bits an association between the specific class label and corresponding distinct n-bit binary value and use the selected association to determine the n-bit binary value associated with the specific class label.

7. The apparatus of any of the preceding claims 2 to 6, the first radio frequency signal comprising cyclically shifted first individual radio frequency signals, wherein the machine learning model is configured to further receive as input cyclic shifts associated with the set of devices.

8. The apparatus of any of the preceding claims, the machine learning model being a Convolutional Neural Network (CNN), the CNN comprising an input layer, the input layer comprising a first reshaping layer for receiving the first set of symbols and a second reshaping layer for receiving the second set of symbols, the input layer being configured to output a concatenated array representing the first set of symbols and second set of symbols.

9. The apparatus of any of the preceding claims, the first radio frequency signal being encoded in time-frequency resources which are allocated for a Physical Uplink Control Channel (PUCCH).

10. The apparatus of any of the preceding claims 1 to 9, the second radio frequency signal being a Demodulation Reference Signal (DMRS), or any reference signal that enables extraction of the first set of symbols from the first radio frequency signal.

11. A method comprising:
receiving (201) a radio frequency signal comprising a first radio frequency signal, the first radio frequency signal being configured to comprise a control information set;
obtaining (203) a first set of symbols representing the control information set from a frequency domain of the radio frequency signal;
inputting (207) at least the first set of symbols to a machine learning model to obtain an output set, wherein the output set indicates a content of the control information set or a non-transmission event with no control information present, the non-transmission event being a Discontinuous Transmission (DTX) event, wherein the radio frequency signal further comprises a second radio frequency signal, the second radio frequency signal being a reference signal, wherein execution of the instructions further causes the apparatus to obtain (205) a second set of symbols representing the reference signal from the frequency domain of the radio frequency signal, further input the second set of symbols to the machine learning model to obtain the output set.

12. A computer program product comprising processor executable instructions for causing an apparatus for performing the method of claim 11.

13. An apparatus, the apparatus comprising at least one processor; and at least one memory storing instructions that, when executed by the at least one processor, cause the apparatus to perform:
receive (301) a training dataset, the training dataset comprising entries, wherein each entry of the entries comprises an input component and a label component, the input component comprising a first set of symbols representing a control information set, the label component comprising the control information set;
use (303) the training dataset to train a machine learning model to predict a presence of the control information set for an input comprising a first set of symbols representing a control information set.

14. A training method for training a machine learning model, the training method comprising:
receiving (301) a training dataset, the training dataset comprising entries, wherein each entry of the entries comprises an input component and a label component, the input component comprising a first set of symbols representing a control information set, the label component comprising the control information set;
using (303) the training dataset to train a machine learning model to predict a presence of the control information set for an input comprising a first set of symbols representing a control information set, the input component further comprising a second set of symbols representing a reference signal, the machine learning model being a Convolutional Neural Network (CNN), the CNN comprising an input layer, the input layer comprising a first reshaping layer for receiving the first set of symbols and a second reshaping layer for receiving the second set of symbols, the input layer being configured to output a concatenated array representing the first and second sets of symbols.

15. The training method of claim 14, the machine learning model being a classifier, wherein each output subset comprises a predicted class label of predefined class labels.
